# FASCICULE DE BREVET EUROPEEN

(11) **EP 2 219 485 B1**
(45) Date de publication et mention de la délivrance du brevet: **07.09.2011**
(21) Numéro de dépôt: 08858877.7
(22) Date de dépôt: 30.10.2008
(51) Int. Cl.: A43B 3/26, A43B 13/18, A01G 9/14

(54) **PROCEDE D 'ISOLATION THERMIQUE D'UNE SERRE RECOUVERTE D'ENVELOPPES GONFLABLES**
VERFAHREN ZUR WÄRMEISOLIERUNG EINES MIT AUFBLASBAREN HÜLLEN BEDECKTEN GEWÄCHSHAUSES
METHOD OF THERMALLY INSULATING A GREENHOUSE COVERED WITH INFLATABLE ENVELOPES

(30) Priorité: 13.12.2007 FR 0759803
(43) Date de publication de la demande: 25.08.2010
(73) Titulaire: Filclair, 13770 Venelles (FR)
(72) Inventeur: THERY, Arnauld, 13510 Eguilles (FR)
(74) Mandataire: Domange, Maxime
(86) Numéro de dépôt international: PCT/FR2008/051956
(87) Numéro de publication internationale: WO 2009/074758

(56) Documents cités:
- EP-A- 1 864 568
- FR-A- 2 315 844

## Description

La présente invention concerne le domaine des serres, notamment pour la culture de végétaux, présentant une couverture plastique.

Plus particulièrement, la présente invention concerne les serres, de préférence de type "multi-chapelles", constituées d'une pluralité de nefs, recouvertes chacune d'une double paroi gonflable comportant deux films transparents superposés, fixés au niveau des chéneaux de ladite nef, formant ainsi une pluralité d'enveloppes dans lesquelles on injecte de l'air, afin d'augmenter l'isolation thermique de la serre. Cette couche d'air apportée par l'enveloppe gonflée d'air permet de diminuer le coefficient de déperdition thermique au niveau de ladite couverture.

Dans les installations actuelles, le gain énergétique de chauffage de la serre, résultant de cette amélioration de l'isolation thermique de la couverture, peut atteindre 50%.

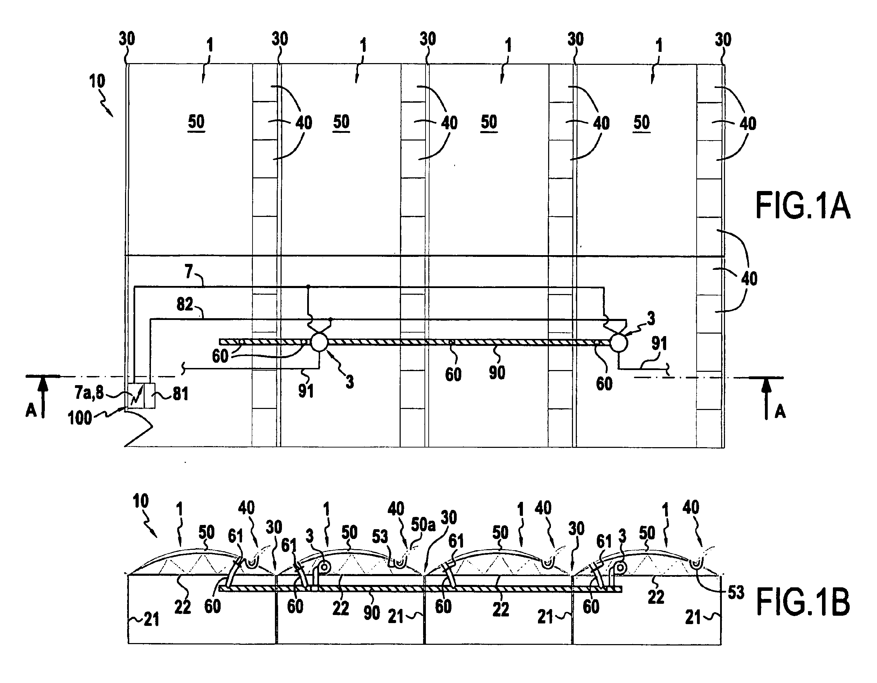

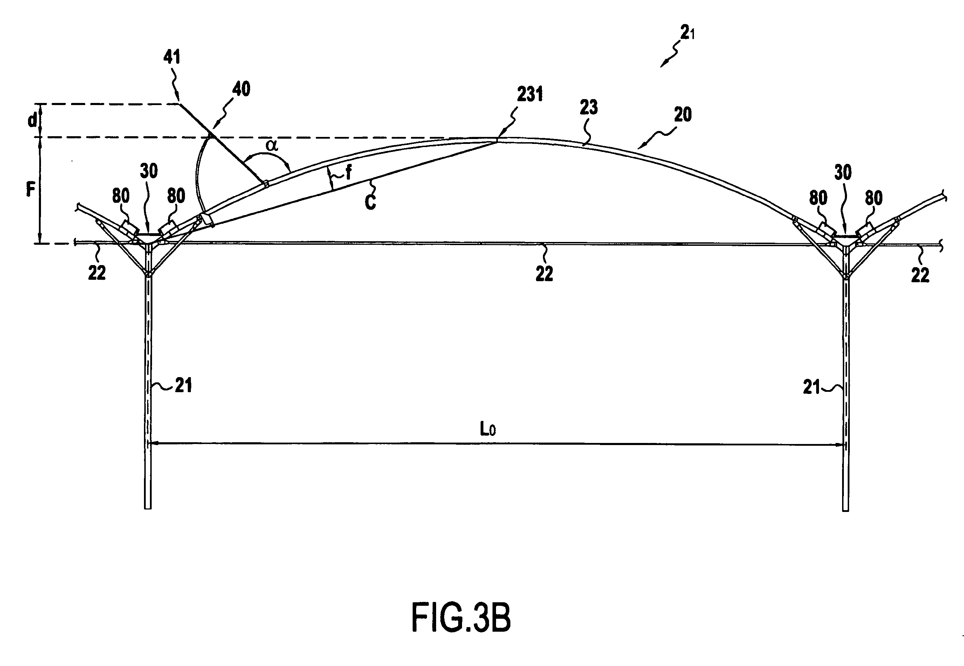

Un exemple une telle serre est représenté aux figures 1B et 3B. Ces serres comportent une pluralité de fermes parallèles constituées chacune d'un cintre supérieur constitué par un ou plusieurs profilés métalliques formant un arc, brisé ou non, et reposant sur les extrémités supérieures de deux poteaux latéraux verticaux, eux-mêmes reliés entre eux par une traverse de rigidification de l'ensemble. D'autres types de serres "multi-chapelles" comprennent des nefs en toiture en pentes plates à double versants.

Les fermes sont reliées entre elles par au moins une entretoise disposée sous leur cintre et par des chéneaux latéraux reliant les poteaux latéraux des fermes consécutives, lesdites fermes étant recouvertes d'une enveloppe constituée de deux films de matériau plastique transparent tendus sur les cintres entres les chéneaux pour former une nef.

Un autre exemple de nefs est constitué d'arceaux ancrés des deux cotés au sol, la nef étant alors appelée quelquefois "tunnel".

Lorsque la serre ne comporte qu'une seule nef, on parle alors de serre "tunnel" ou "mono-chapelle" et de serre "multi-tunnels" ou "multi-chapelles" lorsque la serre comporte plusieurs nefs disposées parallèlement les unes aux autres dans leur sens longitudinal. Des serres de ce type ont été décrites notamment dans le brevet FR 8915009.

La présente invention concerne plus particulièrement les serres de type "multi-chapelles" et propose une structure améliorant la climatologie dans les serres "multi-chapelles".

De façon connue, les nefs de faible longueur, notamment de longueur inférieure à 100 m, de préférence inférieure à 50 m, peuvent être couvertes sur leur toiture d'une seule enveloppe s'étendant sur toute la longueur de la nef. Mais, pour les nefs de plus grande longueur, notamment de longueur de 100 à 250 m, on installe avantageusement plusieurs enveloppes mises bout à bout dans la longueur, reliées pneumatiquement une à une en série. En pratique, une nef pourra nécessiter la mise bout à bout de deux ou trois enveloppes pour couvrir toute la longueur de sa toiture.

D'autre part, les pignons et les rives de la serre peuvent également être recouverts d'enveloppes reliées également pneumatiquement entre elles et à celles de la toiture de la nef correspondante.

Pour réaliser le gonflage des différentes enveloppes de couverture d'une serre multi-chapelles, on met en ouvre, traditionnellement, un nombre limité de dispositifs de gonflage de type turbine, chaque turbine permettant d'alimenter en air les enveloppes d'une pluralité de nefs par l'intermédiaire d'un réseau de canalisations rigides transitant transversalement de nef à nef, fixé sur la charpente de la serre à l'intérieur de celle-ci. A partir d'une canalisation rigide en PVC commune, plusieurs dérivations comportant des tuyaux souples alimentent une pluralité d'enveloppes d'une pluralité de nefs. Ainsi, classiquement, comme représenté sur les figures 1A et 1B, on peut gonfler par exemple une serre de cinq nefs, représentant une surface de 2 000 m², avec deux turbines.

Sur les figures 1A et 1B, on a représenté un exemple d'installation actuelle de système de gonflage d'enveloppes d'une serre. Les enveloppes sont constituées de deux films rectangulaires superposés, fixés par clipsage sur toute leur longueur au niveau de leurs bords longitudinaux et au niveau des chéneaux, comme il sera explicité ci-après. D'autre part, les bords transversaux (largeur de l'enveloppe) sont fixés chacun sur un des cintres de la structure.

Cette fixation des enveloppes n'est pas parfaitement hermétique sur le pourtour de l'enveloppe. II en résulte de légères fuites et la nécessité de compléter régulièrement le gonflage, des enveloppes, compte tenu des pertes en air qu'elles subissent.

Le système de gonflage, actuellement, est commandé par intermittence à l'aide d'une minuterie commune pour l'ensemble des dispositifs de gonflage, c'est-à-dire selon un même cycle de durée de fonctionnement du dispositif de gonflage et de durée d'arrêt de fonctionnement du dispositif de gonflage. Il en résulte qu'il n'est pas possible d'obtenir un gonflage uniforme de l'ensemble des enveloppes car il gonfle uniformément toutes les enveloppes, alors que certaines peuvent se dégonfler plus rapidement en raison d'une différence de qualité de la fixation des films sur leur pourtours et/ou de coupures accidentelles de l'enveloppe, notamment par attaque d'oiseaux, etc. Les enveloppes présentant des fuites ne peuvent pas bénéficier d'un temps de gonflage supérieur à celui qui est programmé pour l'ensemble des enveloppes, ce traduisant soit par un sous gonflage de l'enveloppe si elle est isolée des autres enveloppes par un clapet anti-retour, soit un sous gonflage général de l'ensemble des enveloppes si l'air circule librement entre elles.

Il en résulte que, en général, même en mettant en ouvre des dispositifs de gonflage relativement puissants, on n'arrive pas à atteindre un sur gonflage suffisant des enveloppes, notamment la surpression dans les enveloppes est en général inférieure à 100 Pa, ce qui représente une épaisseur maximale de l'enveloppe au faîtage en général inférieure à 50 cm pour des serres dont l'enveloppe en développé présente une largeur entre 6 à 15 m.

Le document FR 2 315 844 décrit un procédé d'isolation thermique selon le préamble de la revendication 1 et une serre selon le préambule de revendication 3.

Le but de la présente invention est de fournir un procédé d'isolation thermique d'une serre de type multi-chapelles, portant des couvertures double paroi constituées d'enveloppes gonflables, amélioré, notamment dont le taux d'isolation est amélioré pour un rendement énergétique global également amélioré en consommation d'énergie électrique.

Un autre but de la présente invention est d'assurer une tension homogène des enveloppes de couverture de la serre, et fiable dans le temps, afin d'éliminer, notamment, les risques de dégradation due au vent.

Un autre but de la présente invention est de fournir une installation de régulation du gonflage des différentes enveloppes de la serre dont la structure et le montage soient plus simples, et donc plus rapides et moins coûteux à mettre en place et, également, moins coûteux en fonctionnement.

Pour ce faire, la présente invention fournit un procédé d'isolation thermique d'une serre, de préférence de type multi-chapelles, comprenant une pluralité de nefs, chaque nef étant recouverte d'au moins une enveloppe constituée d'une double paroi gonflable comportant deux films superposés, fixés sur tout leur pourtour, sur l'ossature de la nef, notamment fixés au niveau des chéneaux de chaque nef, procédé dans lequel on gonfle lesdites enveloppes avec une pluralité de dispositifs d'injection d'air à moteur électrique, caractérisé en ce que l'on met en oeuvre au moins un dit dispositif d'injection d'air par enveloppe ou par ensemble d'enveloppes reliées entre elles pneumatiquement en série et recouvrant une même nef, chaque dit dispositif d'injection d'air coopérant avec un capteur de pression, notamment de type pressostat, mesurant la différence de pression entre l'intérieur et l'extérieur de ladite ou d'une desdites enveloppes de chaque nef, de sorte que ledit capteur provoque l'arrêt ou la marche dudit dispositif d'injection d'air alimentant l'enveloppe ou l'ensemble d'enveloppes lorsque la pression à l'intérieur de l'enveloppe ou de l'ensemble d'enveloppes de chaque nef est en dehors d'une plage de valeurs déterminée.

La présente invention consiste donc à isoler chacune des nefs en lui attribuant un dispositif de gonflage spécifique, chaque nef et donc un nombre réduit d'enveloppe bénéficiant d'une gestion de la pression de son volume d'air, assurée par un capteur de pression autonome, permettant le réglage d'un seuil minimum de pression (déclenchement du dispositif) et d'une valeur limite maximale d'une plage autorisée de pression (arrêt du dispositif).

Ce système présente l'avantage d'offrir, pour chaque nef et donc pour un nombre réduit d'enveloppe, son propre gonflage autorégulé et d'obtenir ainsi un ensemble d'enveloppes dont le gonflage est quasi uniforme. Au total, on améliore ainsi le taux d'isolation thermique d'environ 20% par rapport au système de la technique antérieure avec minuterie et sans contrôle de la pression à l'intérieur des enveloppes.

On peut réguler de façon fiable, pertinente et homogène le gonflage des différentes enveloppes, ce qui rationalise le fonctionnement des dispositifs électriques d'injection d'air, lesquels, en outre, peuvent être moins puissants, ce qui contribue aussi à rationaliser l'énergie consommée pour la mise en ouvre du procédé.

En fin, il n'est plus nécessaire de mettre en ouvre un réseau de liaisons pneumatiques sous forme de canalisations rigides pour desservir une pluralité d'enveloppes à partir d'un même dispositif d'injection d'air, ce qui contribue à faciliter grandement le montage de l'installation, mais diminue également les pertes de charge inévitables au sein de ces canalisations de transfert d'air entre différentes enveloppes de la technique antérieure.

Il y a lieu, en effet, d'observer que, dans la technique antérieure, la pose de ces canalisations rigides de réseau de transfert d'air, au niveau de la charpente de la serre, constituait une part importante du coût de l'installation de gonflage et, d'autre part, constituait une gène pour la mise en place d'écrans thermiques additionnels. La a technique antérieure prévoyait en effet une canalisation transversale qui transitait de nef à nef et devait donc passer sous les chéneaux. Ceci constituait un inconvénient pour l'installation d'un écran thermique ou d'ombrage sur la totalité de la surface de la serre, en dessous et le plus proche possible du fond des chéneaux afin de limiter les dimensions des pièces de suspension du système accrochés sur la traverse nommée support culture. Cette canalisation dans ce voisinage constituait donc une gêne pour le déploiement de l'écran et en réduisait son efficacité.

Avantageusement, on établit une surpression dans les enveloppes de ladite serre par rapport à la pression extérieure pour obtenir une différence de pression comprise dans une fourchette de 80 à 250 Pa, de préférence de 100 à 150 Pa.

Plus particulièrement, la surpression de gonflage permet d'obtenir une épaisseur d'enveloppe, au niveau du faîtage, supérieure ou égale à 7%, de préférence supérieure ou égale à 10% de la largeur de la nef, c'est-à-dire de la largeur des fermes supportant la couverture. Ainsi, en pratique, pour des films étirables de matière plastique, telle que du polyéthylène, d'épaisseur de 100 à 500 µm, de préférence 200 à 300 µm, et largeurs de nefs de 5 à 15 m, on obtient une épaisseur d'enveloppe au faîtage de 50 à 80 cm.

La présente invention fournit également une serre, de préférence de type multi-chapelles, comprenant une installation de régulation du gonflage d'enveloppes de couverture pour la mise en ouvre d'un procédé d'isolation thermique d'une serre selon la revendication 1 ou 2, caractérisée en ce qu'elle comporte desdits dispositifs d'injection d'air et desdits capteurs de pression fixés sur la charpente de la serre à proximité de la ou d'une dite enveloppe d'un ensemble d'enveloppes de chaque nef.

Plus particulièrement, ledit dispositif d'injection d'air est une turbine du type ventilateur de gaine connectée à une gaine souple assurant la liaison directe avec une dite enveloppe et coopérant avec un clapet anti-retour permettant d'isoler ladite ou lesdites enveloppes de la nef.

On entend ici par "ventilateur de gaine", un ventilateur insufflant de l'air dans une gaine qui lui est connectée.

Ces ventilateurs de gaine sont classiquement utilisés dans les installations de type VMC (Ventilation Mécanique Contrôlée).

Avantageusement, ledit dispositif d'injection d'air est une turbine de type ventilateur de gaine dont le moteur électrique alimenté en courant monophasé et ledit capteur de type pressostat sont montés en série, sur le même câble électrique d'alimentation, de référence le dispositif d'injection d'air présentant une puissance inférieure à 100 W. Ainsi, le pressostat se comporte comme un interrupteur.

Dans la technique antérieure, de par les pertes de charges et la nécessité d'alimenter un plus grand nombre d'enveloppes, les dispositifs d'injection d'air étaient alimentés en triphasé (400 V). Et, d'autre part, la minuterie commandant le fonctionnement des différents dispositifs d'injection d'air, était alimentée par un câble distinct et requérait la mise en place d'un réseau de câbles de commande des différents dispositifs d'injection d'air à partir de la minuterie distinct des réseaux d'alimentation desdits dispositifs d'injection d'air, ce qui constituait une perte de temps supplémentaire au montage de l'installation.

De préférence, le dispositif d'injection d'air est alimenté en air provenant de l'intérieur de la serre. L'air extérieur aux enveloppes est ainsi moins sensible à des différences de pression liées, par exemple, au vent.

Dans la technique antérieure, les turbines de gonflage des enveloppes étaient alimentées en air provenant de l'extérieur, ce qui nécessitait également la mise en ouvre d'une canalisation d'arrivée d'air depuis l'extérieur jusqu'à la turbine à l'intérieur de la serre.

Avantageusement encore, lesdits dispositifs d'injection d'air sont positionnés sensiblement à mi-longueur entre les deux fermes d'extrémités des nefs, c'est-à-dire à mi-longueur d'une unique enveloppe ou de l'enveloppe centrale d'un nombre impair d'enveloppes couvrant la nef sur toute sa longueur ou entre deux enveloppes dans le cas d'un nombre pair d'enveloppes couvrant la longueur de la nef en toiture.

Le positionnement, à mi-longueur de l'unique enveloppe ou de l'ensemble d'enveloppes de la nef permet d'accélérer le gonflage des enveloppes à une pression donnée, dans la mesure où l'air se réparti équitablement entre les deux parties de l'enveloppe ou de la série d'enveloppes situées de part et d'autre de l'orifice d'arrivée d'air dans l'enveloppe centrale ou entre deux enveloppes contiguës.

Dans un mode de réalisation particulier, notamment lorsque la nef est couverte en toiture par un nombre impair d'enveloppes reliées les unes les autres en série, ledit dispositif d'injection d'air est positionné en vis-à-vis des extrémités longitudinales bout à bout de deux enveloppes consécutives adjacentes recouvrant une même nef, et ledit dispositif d'injection d'air alimente, par l'intermédiaire d'un même raccord de dérivation et deux premiers tuyaux souples lesdites deux enveloppes à proximité de leurs extrémités longitudinales adjacentes et, le cas échéant, ledit dispositif d'injection d'air coopère avec un clapet anti-retour positionné en amont dudit raccord de dérivation.

On comprend que, dans ce cas, le raccord de dérivation et les deux premiers tuyaux souples de liaison pneumatique aux extrémités adjacentes des deux enveloppes contiguës servent à la liaison pneumatique entre les deux enveloppes, lorsque le dispositif d'injection d'air est à l'arrêt.

Dans les cas nécessitant cependant la prise d'air à l'extérieur, les dispositifs de gonflage restent identiques mais leurs positionnements se font nécessairement en extrémité de nefs, sur la face intérieure du pignon, avec une traversée de paroi permettant le passage du tube de prise d'air extérieur.

Avantageusement encore, le capteur de pression est positionné dans un coffret électrique comprenant également un disjoncteur ou fusible du dispositif d'injection d'air, ledit coffret étant suffisamment ajouré pour que la température à l'intérieur du coffret soit sensiblement identique à la température à l'intérieur de la serre. Cette caractéristique permet d'éviter une surchauffe ou un différentiel de pression entre l'air à l'intérieur de la serre et l'air à l'intérieur du coffret.

Avantageusement encore, les différents capteurs de pression peuvent être reliés à un ordinateur de commande qui permet de régler la fourchette de plages autorisées de pression pour le fonctionnement des dispositifs d'injection d'air, en fonction d'autres paramètres, de préférence en fonction de la vitesse du vent à l'extérieur de la serre. Ledit ordinateur est donc couplé, par exemple, à un anémomètre, car, quand il y a du vent, il est avantageux de sur gonfler davantage les enveloppes pour qu'elles se maintiennent mieux sur la structure de la serre.

De façon connue en soi, la serre de type "multi-chapelles", comportant au moins une nef constituée d'une pluralité de fermes implantées parallèlement les unes aux autres selon un pas régulier sur toute la longueur de ladite nef, lesdites fermes étant constituées de deux poteaux verticaux reliés entre leurs extrémités supérieures par une traverse et supportant au niveau de ces extrémités supérieures un cintre, lesdites fermes étant reliées les unes aux autres par des chéneaux longitudinaux fixés entre lesdites extrémités supérieures des poteaux des fermes, lesdits cintres supportant un ouvrant mobile sur chéneau et étant recouverts d'une enveloppe de couverture transparente formée d'une double paroi de films de matière plastique tendus sur lesdits cintres, caractérisée en ce que qu'elle comporte des moyens de tensionnement variable des deux films formant la double paroi gonflable, lesdits moyens de tensionnement variable comportant des clips gigognes permettant de bloquer et tendre indépendamment les deux films de la double paroi de l'enveloppe gonflable sur le chéneau.

Ceci permet avantageusement de tendre différemment les deux films formant la paroi gonflable, et notamment de tendre plus fortement la paroi du dessous pour éviter les effets "ballon" survenant traditionnellement avec les couvertures à double paroi gonflable, effets "ballon" qui provoquent des écoulements de condensation sur les cultures.

Ces clips "gigognes" sont en fait des clips conformés pour pouvoir se clipper les uns dans les autres, ce qui permet de bloquer, sur un même chéneau une pluralité de films, et par conséquent de tendre différemment deux films d'une double paroi gonflable de serre.

Une des conditions climatiques essentielles à procurer et à entretenir dans ces serres est l'aération. En effet, la ventilation de la serre permet de renouveler l'air à l'intérieur de celle-ci et d'éviter la condensation. Une aération suffisante et maîtrisée à l'intérieur de la serre peut ainsi permettre d'influencer de manière positive deux des autres conditions climatiques principales pour les cultures, à savoir l'hygrométrie et la température.

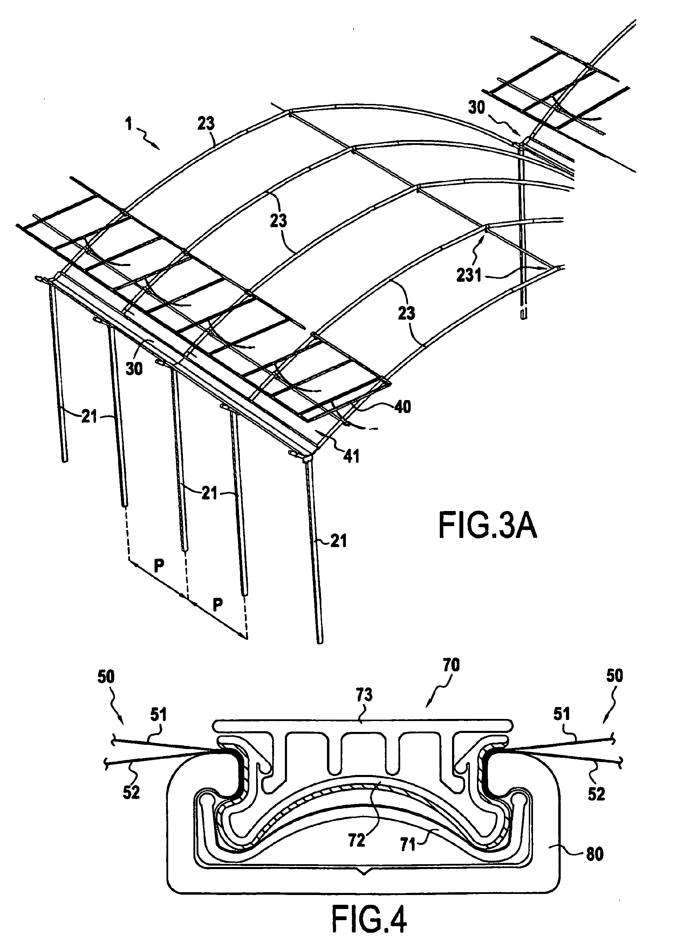

Pour gérer et améliorer l'aération dans les serres, différentes techniques ont été employées jusqu'à ce jour. Outre l'aération forcée par des ventilateurs, la principale technique de ventilation des serres "chapelle" consiste à procurer un ouvrant mobile dans la couverture de la serre. Cet ouvrant consiste en un battant de couverture articulé sur les cintres des fermes d'une nef. Cet ouvrant peut être dit "de faîtage", auquel cas il est articulé au niveau de l'entretoise de faîtage des nefs de la serre. Il peut s'agir d'un ouvrant simple ou de deux ouvrants articulés en ouverture symétriquement, dits "ouvrants papillon". Cette solution représente actuellement quelques 80% du marché des serres de type "chapelle" dans le monde. Il peut également être dit "sur rive" ou encore "sur chéneau", comme représenté aux figures 3A et 3B, auquel cas il est articulé le long d'une ligne d'articulation parallèle aux chéneaux située à une distance intermédiaire entre celui-ci et le faitage de la serre et dont le bord "de fuite", opposé à cette ligne d'articulation, repose sur un chéneau lorsque ledit ouvrant est en position fermée.

Dans un mode de réalisation, les premières tuyauteries flexibles ou gaines, entre les dispositifs d'injection d'air et une dite enveloppe, et les secondes tuyauteries flexibles souples, entre les capteurs de pression de type pressostat et une dite enveloppe, sont raccordées au niveau du film de dessous de la même enveloppe, de préférence à proximité des chéneaux, le cas échéant sensiblement juste au-dessus desdits ouvrants mobiles sur chéneaux.

Le raccordement des tuyaux flexible à une distance de l'extrémité des nefs, c'est-à-dire des chéneaux, correspondant à la distance entre le chéneau et la ligne d'articulation des ouvrants mobiles sur chéneaux, permet de limiter la longueur des tuyaux flexibles sans affecter l'homogénéité et la rapidité du gonflage.

Dans un autre mode de réalisation, en cas de nef de grande longueur, pour garantir qu'aucune enveloppe de l'ensemble d'enveloppes reliées pneumatiquement ne soit sous gonflée, il peut être préférable de disposer le capteur de pression relié pneumatiquement à une enveloppe disposée à une des extrémités longitudinales de la nef (c'est-à-dire d'un pignon de ladite net) la plus éloignée de l'enveloppe au niveau de laquelle l'alimentation en en air par ledit dispositif d'injection d'air est réalisé

En tout état de cause, la bride de connexion est plus proche des chéneaux que du faîtage de la nef.

D'autres caractéristiques et avantages de la présente invention ressortiront mieux à la lecture de la description détaillée qui va suivre de plusieurs exemples de réalisation, faite de manière illustrative et non limitative, en référence aux dessins annexés sur lesquels :

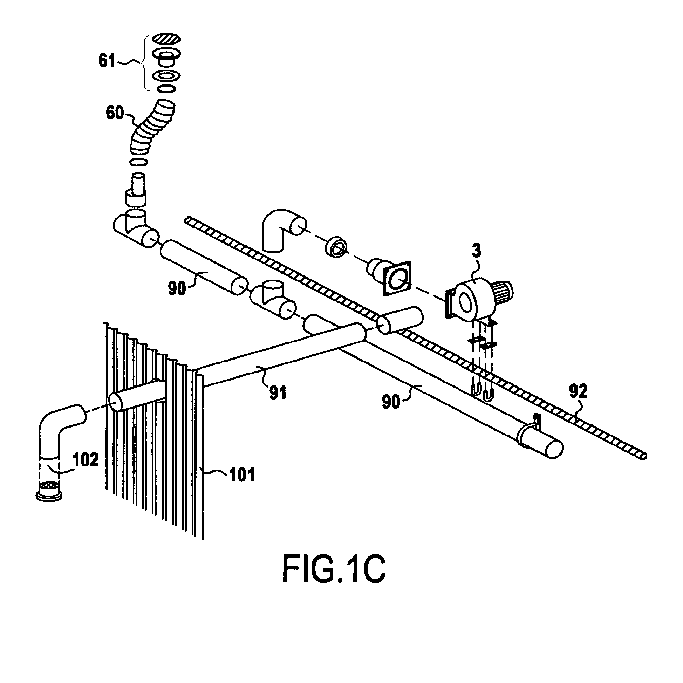

les figures 1A, 1B et 1C sont relatives à une serre comprenant une installation de gonflage d'enveloppes de couverture selon la technique antérieure, la figure 1A étant une vue de dessus schématique, la figure 1B étant une vue schématique en coupe selon AA de la figure 1A, et la figure 1C étant une vue en éclaté du détail de la liaison d'une turbine 3 de ventilation avec un réseau de tuyauteries 90, 91, 60;

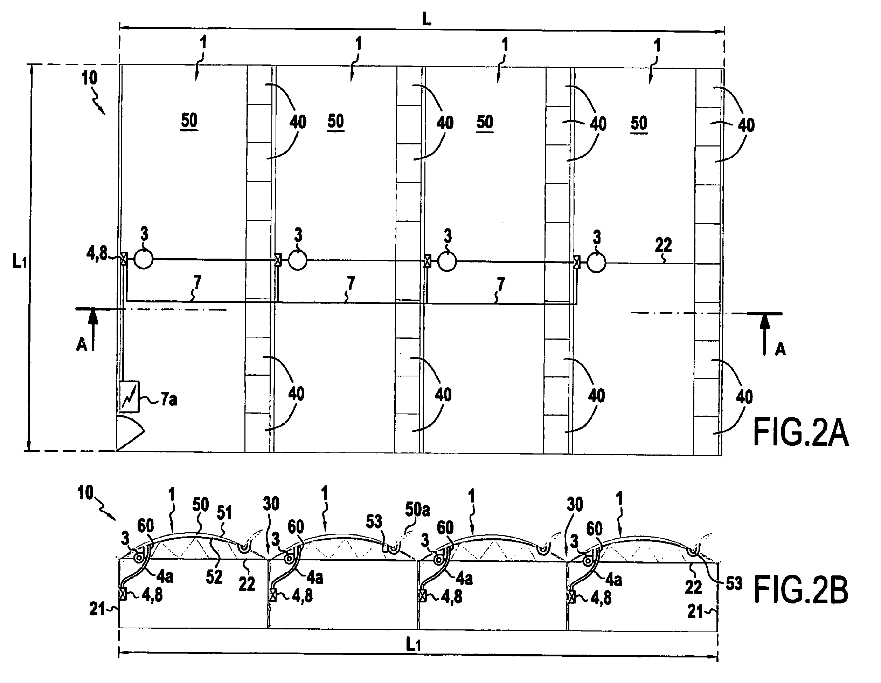

les figures 2A et 2B sont rotatives à une serre selon l'invention comprenant une installation de gonflage, d'enveloppes avec une turbine de ventilation 3 pour chaque nef et un pressostat 4 commandant le fonctionnement de chaque turbine selon la pression à l'intérieur d'une enveloppe 50 de chaque nef, la figure 2A étant une vue schématique de dessus, la figure 2B étant une vue schématique en coupe selon AA de la figure 2A;

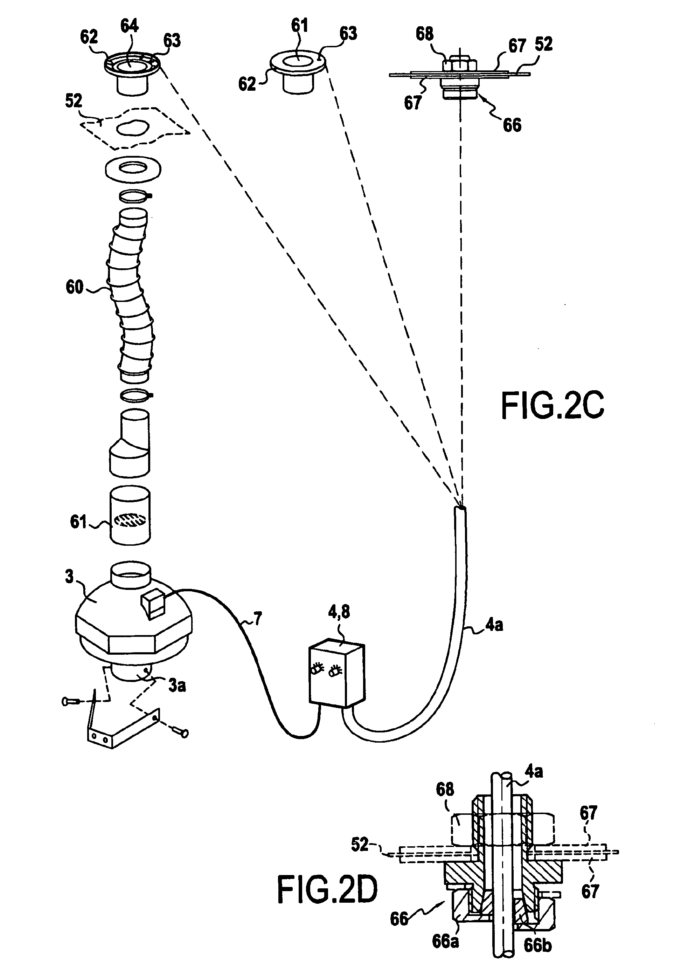

les figures 2C et 2D sont des vues du détail de connexion de la turbine de ventilation 3 et capteur 4 avec le film de dessous 52 de l'enveloppe 50; la figure 2D représentant un presse-étoupe;
les figures 3A, et 3B présentent des vues en perspective (figure 3A) et en coupe (figure 3B) d'une nef constituée de l'assemblage en parallèle de fermes 20;
la figure 4 présente le détail d'un dispositif de fixation d'une enveloppe 50 à l'aide d'un clip 70 coopérant avec une gorge 80 au niveau des chéneaux 30.

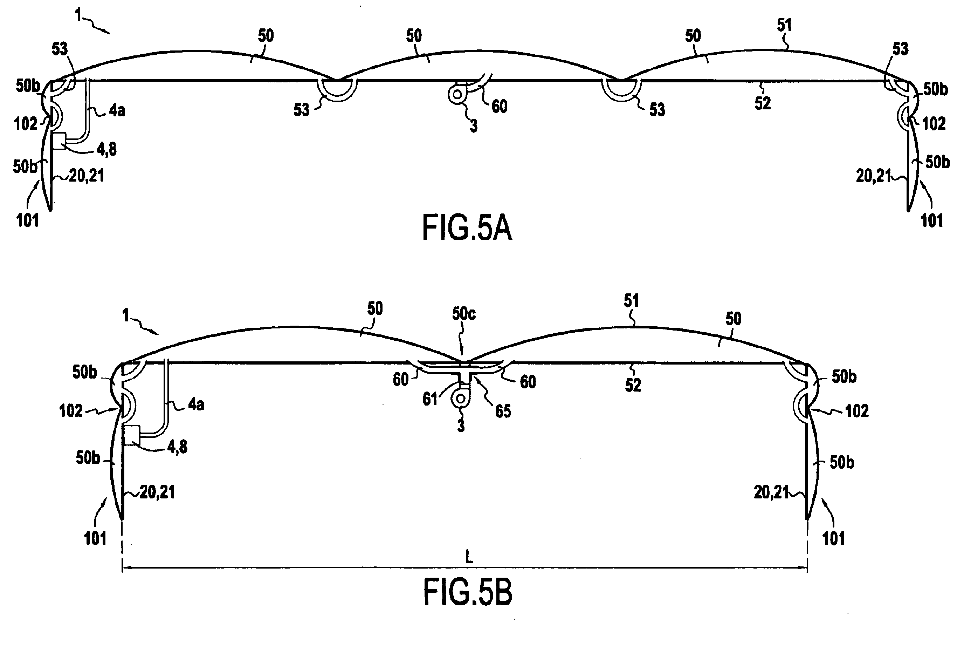

les figures 5A et 5B sont des représentations schématiques de coupes longitudinales au faitage d'une nef dont la toiture est recouverte de trois enveloppes (figure 5A) ou deux enveloppes (figure 5B) reliées pneumatiquement à leurs extrémités bout à bout et, dans les deux cas, avec deux enveloppes recouvrant les pignons au niveau des fermes 20 d'extrémité, les différentes enveloppes d'une même nef étant alimentées par un même dispositif d'injection d'air.

Sur les figures 1A et 1B, on a représenté une serre 10 multi-chapelles traditionnelle avec cinq nefs 1, couverte par des enveloppes double paroi 50 comprenant des ouvrants 40 également reliés par des enveloppes 50a qui communiquent avec les enveloppes 50 par une liaison tubulaire souple 53 de façon connue.

Les figures 3A et 3B représentent une nef 1 de serre telle due connue de l'état de la technique. Cette nef 1 est composée de fermes 20 implantées parallèlement dans le sol selon un pas régulier P. Les fermes 20 sont composées de poteaux droits 21, supportant au niveau de leur extrémités supérieures un cintre 23 en forme d'arc brisé au faîte 231 des fermes 20.

Dans le sens longitudinal de la nef 1, les fermes 20 sont reliées entre elles par des chéneaux 30, servant à la récupération et l'évacuation des eaux de pluie. De plus, un ouvrant d'aération 40 est monté sur les cintres 23 des fermes 20 dans le sens longitudinal de la nef. Cet ouvrant 40, comme représenté sur les figures 3A et 3B, est un ouvrant sur chéneau. La nef 1 est destinée à être recouverte d'au moins une enveloppe de couverture 50 constituée de deux films de matière plastique transparente, par exemple de polyéthylène. Cette enveloppe est tendue sur les cintres 23 et l'ouvrant 40, et est bloquée, de façon conventionnelle, par des clips 70 sur les chéneaux 30.

Les deux poteaux 21 verticaux sont reliés entre leurs extrémités supérieures par une traverse horizontale 22 et supportent au niveau de ces extrémités supérieures un cintre 23. Lesdites fermes 20 sont reliées les unes aux autres par des chéneaux 30 longitudinaux fixés entre lesdites extrémités supérieures des poteaux 21 des fermes. Les cintres 23 supportent un ouvrant 40 sur chéneau et sont recouverts d'une enveloppe de couverture 50 transparente formée de deux films 51, 52, de polyéthylène tendus sur lesdits cintres.

Sur les figures 1A et 1B, deux turbines de ventilation 3 alimentent les cinq nefs, par l'intermédiaire d'un réseau de canalisations PVC rigides 90, à partir desquelles cinq dérivations, comprenant des tuyauteries flexibles 60 coopérant avec des clapets anti-retour 61, assurent la liaison avec chacune des enveloppes 50 de chaque nef.

Sur la figure 1C, on montre le détail des pièces de canalisation rigides 90 et flexibles 60, nécessaires pour mettre en place ce réseau d'alimentation des enveloppes des différentes nefs. La canalisation rigide doit être supportée par une structure métallique transversale 92. D'autre part, dans la technique antérieure, les turbines de ventilation 3 injectent de l'air récupéré par des canalisations 91 de l'extérieur de la serre, la prise d'air se faisant au-delà des pignons ou rives 101.

Comme représenté sur les figures 1A et 1B, l'arrivée d'air 102 dans les enveloppes 50 se fait en général à proximité de la zone 30 des chéneaux où sont clipsés les deux films transparents 51 et 52 constituant l'enveloppe 50, comme détaillé ci-après.

Sur la figure 1A, on a montré le réseau de câbles d'alimentation 7 des turbines de ventilation 3 à partir de l'alimentation électrique 7a. Compte-tenu du fait que ces deux turbines de ventilation 3 doivent gonfler cinq enveloppes avec des pertes de charge liées au réseau d'alimentation pneumatique déporté, celles-ci doivent présenter des caractéristiques de puissance et de performance élevées, de sorte qu'il s'agit de turbines de ventilation alimentées en courant triphasé 400 V (P=120 W à I=0,35 A avec un débit = 400 m3/h) pour des enveloppes d'environ 10 m de large et 15 à 50 m de longueur.

Une même minuterie 81 dotée de son propre câblage de commande 82 des différentes turbines de ventilation 3, est située à proximité de la porte de la serre 100. Les turbines de ventilation 3 sont excentrées par rapport à la longueur de la nef, pour être plus proches, de préférence à proximité, d'un pignon, de manière à faciliter l'aspiration de l'air 91 depuis l'extérieur 102 de la serre. La minuterie 81 gère le gonflage selon une chronologie identique pour l'ensemble des enveloppes 50, ce qui est source d'hétérogénéité de gonflage entre les différentes enveloppes et des baisses de performance d'isolation thermique escomptées par ce matelas d'air contenu dans l'enveloppe, comme explicité ci-dessus.

Sur les figures 2A et 2B, on a représenté une serre 10 dont les cinq nefs 1 sont équipées chacune d'une turbine de ventilation 3 fixée sur une traverse horizontale 22 entre deux poteaux verticaux 21, couplées chacune à un capteur de pression de type pressostat 4, fixé à des poteaux 21 de fermes 20, comme explicité ci-après en liaison avec les figures 3A et 3B, reliées par des conduites flexibles 60 et, respectivement 4a. Les poteaux 21, auxquels sont fixés les capteurs 4, sont sensiblement à mi-longueur 11 des nefs 1. D'autre part, les conduites flexibles 60 de liaison des turbines de ventilation 3 avec le film de dessous 52 de l'enveloppe 50, d'une part, et conduites flexibles 4a de liaison des capteurs 4 avec le film 52, arrivent au niveau du film de dessous 52 sur une même bride de raccordement 62 selon un premier mode de réalisation A (figure 2C), ou sur une bride distincte équipée d'un clapet 61, suffisamment éloignée de la bride de gonflage pour éviter les perturbations de mesure de pression dues au flux d'air, selon un second mode de réalisation B (figure 2C)..

Selon la présente invention, les turbines de ventilation sont alimentées par un courant monophasé 230V et l'air est injecté directement dans les conduites flexible 60 d'alimentation des enveloppes à partir d'air pris de préférence en 3a à l'intérieur de la serre.

Selon la présente invention, les capteurs de pression 4 sont logés à l'intérieur des différents coffrets électriques 8 comprenant les disjoncteurs ou fusibles des turbines de ventilation 3. D'autre part, les turbines de ventilation sont alimentées en courant monophasé 230V, cette puissance étant suffisante dans la mesure où les turbines gonflent chacune une seule enveloppe et sont reliées directement à l'enveloppe avec un minimum de perte de charge.

De préférence, les turbines de ventilation 3 sont situées à proximité des poteaux 21, à la base des arches cintrées 23, sensiblement au niveau des chéneaux 30, et sont raccordées à l'enveloppe à une distance L2 correspondant à la distance entre le chéneau 30 et le bord d'articulation d'un ouvrant mobile 40 sur chéneau, soit 1 à 2 m. Ainsi, la longueur des conduites flexibles 60 doit être seulement légèrement supérieure à la distance entre la base des arcs cintrés 23 et la ligne d'articulation juste au-dessus des ouvrants 40.

D'autre part, ce nouveau montage en alimentation monophasé permet de mettre en oeuvre une alimentation des capteurs 4 montés en série sur la même alimentation électrique 7 que les turbines de ventilation 3, de sorte que les capteurs de pression 4 de type pressostat fonctionnent comme des interrupteurs vis-à-vis des turbines de ventilation 3. La suppression des câbles de commande 82 de la minuterie 81 indépendants des câble d'alimentation de puissance électrique 7 des turbines 3 constitue une diminution des coûts et un gain de temps au montage significatif par rapport à la technique antérieure.

Sur la figure 2C, on a montré en éclaté les différentes pièces intervenant dans la connexion entre les turbines de ventilation 3 et les films de dessous 52 de l'enveloppe 50, avec une pièce comprenant un clapet 61 placé, soit juste en sortie des turbines de ventilation 3, soit juste en amont de la bride 62. Les coffrets électriques contenant les capteurs de pression 4 sont perforés de manière à ce que l'air ambiant à l'intérieur des coffrets soit dans des conditions de température et de pression identique à l'air à l'intérieur de la serre.

On peut également mettre en oeuvre des turbines de ventilation alimentées en courant triphasé, mais, dans ce cas, les capteurs de pression devront être couplés à des contacteurs pour être montés en série sur la phase du câble de puissance d'alimentation des turbines de ventilation 3.

Sur les figures 2A et 2B, on a représenté une pluralité de coffrets électriques 8 intégrant chacun un capteur de pression 4, positionnés à proximité de chaque turbine de ventilation 3. Toutefois, selon un autre montage, il peut être avantageux de réunir tous les capteurs 4 et coffrets 8 dans un unique coffret, juste en aval de l'alimentation électrique 7a.

Sur la figure 3B, la nef présente des rapports dimensionnels et une structure tout à fait propres et avantageux comme développé ci-après.

La flèche F des cintres 23 et la largeur L0 des fermes 20 sont telles que leur rapport F/L0 est inférieur ou égal à 0,15. Cette caractéristique dimensionnelle de la serre a été déterminée comme une condition avantageuse pour obtenir une puissance de ventilation de la serre suffisante, notamment lorsque des filets de protection anti-insectes sont mis en place au niveau des ouvrants 40.

Une autre caractéristique avantageuse pour que la serre de l'invention présente une puissance d'aération suffisante et améliorée par rapport aux serres "multi-chapelles" classiques, est que l'extrémité 41 de l'ouvrant 40 sur lesdits cintres 23 dépasse, en position d'ouverture, le faîte 231 des fermes 20. Les meilleurs résultats en termes d'aération on été obtenus, après tests, avec des ouvrants dont l'extrémité 41 dépasse d'au moins 40 cm au dessus du faite 231 des cintres 23 des fermes 20 de la serre.

Cette caractéristique permet en particulier de provoquer, au niveau de l'angle α formé entre l'ouvrant 40 en position d'ouverture et les cintres 23 des fermes (ainsi que la couverture 50), une surpression d'air, cette surpression entraînant, au niveau de l'ouvrant, une dépression et une aspiration d'air vers l'intérieur de la serre. On obtient ainsi une ventilation plus puissante permettant de compenser les effets négatifs des filets de protection contre les insectes disposés les cas échéant aux ouvrants.

La serre de la présente invention présente un profil de voûte, ou profil de couverture sensiblement aplati par comparaison avec les serres "chapelles" traditionnelles. Ce profil aplati se caractérise en particulier, quelque soit la largeur L0 des fermes 20 de la serre, par un rapport dimensionnel de la flèche F des fermes 20 à la corde C de ces mêmes fermes qui est inférieur ou égal à 0, 08, la corde C des fermes 20 étant définie comme le segment de droite joignant le faite 231 de chaque cintre 23 à l'extrémité supérieure des poteaux 21 des fermes.

Un tel rapport de flèche à corde des fermes 20 confère à la serre un profil de voûte beaucoup plus plat, dont le rayon de courbure est plus grand que celui des serres classiques, ce qui, à l'image d'un profil de grand voile sur un bateau, ou d'aile d'avion, permet un meilleur écoulement des filets d'air sur la couverture de la serre, mais également un meilleur écoulement de l'air à l'intérieur de la serre. On obtient ainsi une meilleur homogénéisation de l'air circulant dans la serre, avec une diminution des points d'air chaud et humide et une meilleure ventilation des nefs, ce qui permet d'abaisser, à climat extérieur équivalent, la température à l'intérieur de la serre de 4°C et le degré d'hygrométrie de 20%, par comparaison à une serre "chapelle" traditionnelle.

Les cintres 23, pour favoriser encore l'écoulement des filets d'air sur et sous la couverture 50 de la serre présentent une courbure continue dépourvue de brisure au faîte 231, ladite courbure étant, de préférence, continue sur au moins 80% de la longueur des cintres. En effet, il a été constaté que les brisures au faîte ou les discontinuités de courbures des cintres provoquaient des brisure et discontinuités connexes des parois de couvertures, avec des perturbations d'écoulement de l'air au niveau de ces brisures et discontinuités. C'est pourquoi de préférence, le rayon de courbure des cintres 23 des fermes 20 de la serre de l'invention est sensiblement constant sur toute la longueur desdits cintres.

L'enveloppe de couverture 50 de la serre est une double paroi gonflable constituée de deux films de polyéthylène 51, 52 fixés sur les chéneaux 30 et tendus sur les cintres 23 et entre lesquels, selon des techniques connues, on injecte de l'air pour gonfler la couverture. Une couverture en double paroi gonflable permet, de façon connue, de diminuer le facteur K de déperdition thermique de la couverture des serres jusqu'à 50% par rapport aux serres en couverture simple film.

Toutefois, un inconvénient habituellement rencontré avec les doubles parois gonflables est l'effet dit de "ballon" à proximité des fixations des films aux chéneaux 30, qui sont réalisées par des clips 70 insérés dans des gorges 80 formées sur les chéneaux 30. Ces "ballons" sont dus au fait que la fixation des deux films 51, 52 formant la double paroi gonflable est telle que la tension des deux films est identique. Avec les variations de températures, généralement plus chaudes à l'intérieur qu'à l'extérieur de la serre, le film 52 du dessous tend à se dilater plus fortement que celui du dessus 51, ce qui provoque la formation de ballons d'air, au niveau desquels les eaux de condensation s'accumulent et gouttent sur les cultures ce qui est un inconvénient.

Pour compenser ces effets de ballons avec les couvertures en doubles parois gonflables, la serre selon l'invention prévoit l'emploi de clips gigognes 70 représentés à la figure 4. Ces clips sont composés d'au moins 3 éléments 71, 72, 73 constituant respectivement un premier clip 71 destiné à être inséré dans le fond des gorges 80 de blocage sur chéneaux pour bloquer un premier film 52, un sur-clip 72 pour bloquer un deuxième film 51 par pincement entre le clip 71, les bordures de gorges 80 et ledit sur-clip 72 et une claquette d'étanchéité 73, venant elle-même s'encliqueter sur le sur-clip 72 grâce à des pattes conformées à cet effet et coopérant avec des butées formées sur les bordures du sur-clip 72.

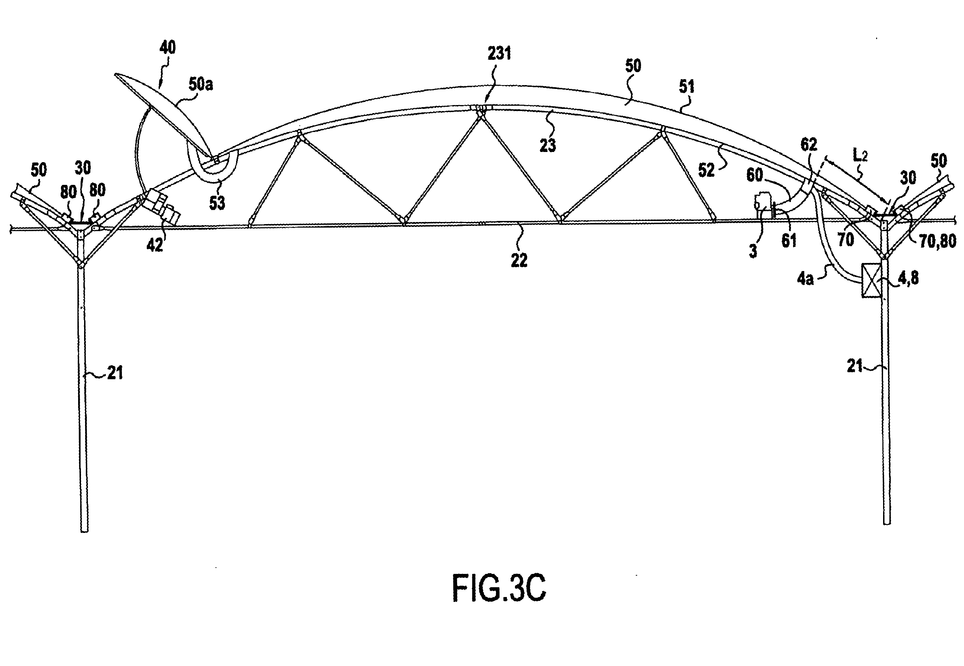

Ces clips gigognes 70 permettent avantageusement de pouvoir exercer sur les films 51, 52 d'une double paroi gonflable des tensions différentes, en particulier de tendre le film du dessous 52 plus fortement que le film du dessus 51, et de fixer ces films fermement indépendamment l'un de l'autre grâce au clip 71 et au sur-clip 72 comme représenté à la figure 3.

La serre selon l'invention, telle que décrite ci-dessus, permet d'améliorer de façon sensible la performance d'isolation thermique du matelas d'air inclus dans les enveloppes 50, d'une part, et une homogénéité de gonflage et performance de sur gonflage accrues. On obtient notamment, pour des serres de largeur L1 =9,6 m et des longueurs L de 15 à 50 m avec une turbine de ventilation 3 montée en 230 V avec une puissance de 80 W pour un courant 1=0,3 A, un débit de 200 m³/h, une surpression d'environ 120 Pa et une épaisseur maximale au faitage de l'enveloppe de 50 à 80 cm pour des films 51, 52, en polyéthylène transparent de 200 µm d'épaisseur. Il en résulte une augmentation des performances d'isolation thermique de la serre d'environ 20%.

Sur la figure 3C, on a représenté une vue en coupe d'une nef 1 au niveau d'une ferme 20 dont la couverture comporte une enveloppe 50 avec un ouvrant mobile 40, lui-même couvert d'une enveloppe 50a reliée à l'enveloppe principale 50 par un tuyau flexible de communication 53. L'ouvrant 40 est apte à être ouvert par un motoréducteur 42. La turbine de ventilation 3 est montée sur la poutre horizontale 22. Le coffret électrique 8 contenant le pressostat 4 est positionné en hauteur. Dans le cas où la serre contient des moyens d'aspersion d'eau, ceci permet que le coffret soit positionné au-dessus des moyens d'aspersion d'eau et ne soit pas aspergé d'eau lorsque ceux-ci entrent en fonctionnement. Toutefois, dans le cas où les cultures à l'intérieur de la serre ne sont pas destinées à être aspergées d'eau, le coffret 8 et le pressostat 4 sont avantageusement situés à une hauteur accessible au personnel au sol, soit de 1,50 à 2 m. Dans un mode de réalisation A (figure 2C), le flexible de liaison 4a du pressostat 4 avec l'enveloppe 50 coopère avec la même bride de raccordement 62, représentée figure 2C, au niveau d'un orifice 63 de sa collerette périphérique, l'orifice principal 64 servant à l'injection d'air provenant de la turbine de ventilation 3 via les gaines souples 60. Une amélioration C (figure 2C) consiste à fixer le flexible 4a à l'aide d'un presse-étoupe 66, lui-même monté sur le film du dessous 52 de l'enveloppe 50, par l'intermédiaire de deux rondelles 67 emprisonnant la paroi 52 et d'un écrou de maintien 68. La fixation du flexible 4a et son étanchéité sont réalisées par le serrage de l'écrou 66a qui comprime un élément élastique 66b autour du flexible 4a. Ce système est avantageusement réalisé à l'aide d'un presse-étoupe électrique de dimension adaptée au diamètre extérieur du flexible.

La bride de connexion 62, et donc l'arrivée des tuyaux 60, et 4a, est avantageusement située à une distance L2 d'environ 1 m du chéneau 30, en pratique L2=1,50 m. De préférence, le tuyau flexible 60 de transfert d'air entre la turbine 3 et l'enveloppe 50, sera d'une longueur inférieure à 2 m, de préférence inférieure à 1,50 m. Le diamètre dudit tuyau 60 sera, de façon appropriée, compris entre 5 et 10 cm. En revanche, le tuyau flexible de communication 4a entre le pressostat 4 et l'enveloppe 50, sera de préférence de longueur inférieure à 5 m, de préférence encore inférieure à 3 m, et de diamètre de 5 à 10 mm. Dans certains cas, les tuyaux 60 et 4a sont raccordés en 62 à l'enveloppe au-dessus du bord d'articulation de l'ouvrant 40 fixé sur chéneau à son autre bord.

Les rouleaux de film constituant les enveloppes 50 ne pouvant pas dépasser un certain poids et un certain volume pour des raisons de manutention, pour les grandes nefs, notamment de 100 à 250 m de longueur, les enveloppes doivent être interrompues au-delà d'une certaine longueur, ce qui nécessite la mise en ouvre de plusieurs enveloppes reliées entre elles, bout à bout dans la direction longitudinale de la nef, pour couvrir la totalité de la longueur d'une nef.

Sur les figures 5A et 5B, on a représenté des nefs de grande longueur, de 100 à 250 m, comportant, respectivement, deux et trois enveloppes 50 disposées bout à bout le long de la longueur de la nef et reliées entre elles pneumatiquement par des tuyaux flexibles 53. D'autre part, les pignons 101 sont également couverts par deux dites enveloppes 50b : une première petite enveloppe au-dessus du niveau 102 correspondant au chéneau des rives de la nef et une plus grande enveloppe 50b dessous le niveau des chéneaux, afin d'en faciliter la pose.

Sur les figures 5A et 5B, le capteur 4 est disposé sur un poteau vertical 21 d'une ferme 20 d'extrémité, au niveau d'un pignon 101 de la nef, de façon à prendre en compte le gonflage, au point le plus éloigné de la turbine 3, compte tenu de la grande longueur des nefs des figures 5A et 5B.

Sur la figure 5B, on a représenté les turbines 3 et capteurs 4, étant entendu toutefois que ceux-ci ne sont pas disposés à l'aplomb du faîtage mais plutôt à proximité des chéneaux. La représentation des dispositifs d'injection d'air 3 et des capteurs de pression 4, sur les figures 5A et 5B, vise donc à montrer leur positionnement dans la direction longitudinale de la nef.

Sur la figure 5A, la turbine 3 est disposée sensiblement à mi-longueur de l'enveloppe centrale. En revanche, sur la figure 5B, la turbine 3 alimente les deux enveloppes intermédiaires d'un raccord de dérivation 65, à partir duquel deux tuyaux souples 60 alimentent les extrémités en vis-à-vis des deux enveloppes 60. Sur la figure 5B, la turbine 3 est donc en vis-à-vis de la zone d'interruption 66 des deux enveloppes bout à bout dans la longueur L de la nef 1. Les deux tuyaux souples 60 assurent la liaison directe des deux enveloppes adjacentes, lorsque le dispositif d'injection d'air 3 ne fonctionne pas, car la turbine coopère avec un clapet anti-retour 61, situé en amont du raccord de dérivation 65, afin d'assurer le libre passage de l'air entre les deux enveloppes.

## Revendications

1. Un procédé d'isolation thermique d'une serre, de préférence de type multi-chapelles (10), comprenant une pluralité de nefs (1), chaque nef étant recouverte d'au moins une enveloppe (50) constituée d'une double paroi gonflable comportant deux films (51, 52) superposés, fixés sur tout leur pourtour, sur l'ossature de la nef, procédé dans lequel on gonfle lesdites enveloppes avec une pluralité de dispositifs d'injection d'air (3) à moteur électrique, **caractérisé en ce que** l'on met en oeuvre au moins un dit dispositif d'injection d'air (3) par enveloppe (50) ou par ensemble d'enveloppes reliées pneumatiquement (53) en série et recouvrant une même nef, chaque dit dispositif d'injection d'air (3) coopérant avec un capteur de pression (4), mesurant la différence de pression entre l'intérieur et l'extérieur de ladite ou d'une desdites enveloppes de chaque nef, de sorte que ledit capteur (4) provoque l'arrêt ou la marche dudit dispositif d'injection d'air (3) alimentant l'enveloppe ou l'ensemble d'enveloppes lorsque la pression à l'intérieur de l'enveloppe ou de l'ensemble d'enveloppes de chaque nef est en dehors d'une plage de valeurs déterminée.

2. Procédé selon la revendication 1, **caractérisé en ce que** l'on établit une surpression dans les enveloppes de ladite serre par rapport à la pression extérieure pour obtenir une différence de pression comprise dans une fourchette de 80 à 250 Pa, de préférence de 100 à 150 Pa.

3. Serre comprenant une installation de régulation du gonflage d'enveloppes de couverture pour la mise en oeuvre d'un procédé d'isolation thermique d'une serre selon la revendication 1 ou 2, **caractérisée en ce qu'**elle comporte desdits dispositifs d'injection d'air (3) et desdits capteurs de pression (4) fixés sur la charpente de la serre à proximité de la ou d'une dite enveloppe (50) d'un ensemble d'enveloppes de chaque nef.

4. Serre selon la revendication 3, **caractérisée en ce que** ledit dispositif d'injection d'air (3) est une turbine du type ventilateur de gaine connectée à une gaine souple (60) assurant la liaison directe avec une dite enveloppe (50) et coopérant avec un clapet anti-retour (61) permettant d'isoler ladite ou lesdites enveloppes de la nef.

5. Serre selon la revendication 4, **caractérisée en ce que** ledit dispositif d'injection d'air (3) est une turbine de type ventilateur de gaine dont le moteur électrique alimenté en courant monophasé et ledit capteur de pression (4) sont montés en série, sur le même câble électrique d'alimentation (7), de préférence le dispositif d'injection d'air présentant une puissance inférieure à 100 W.

6. Serre selon l'une des revendications 3 à 5, **caractérisée en ce que** le dispositif d'injection d'air (3) est alimenté en air provenant de l'intérieur de la serre.

7. Serre selon l'une des revendications 3 à 6, **caractérisée en ce que** lesdits dispositifs d'injection d'air (3) sont positionnés sensiblement à mi-longueur entre les deux fermes d'extrémités des nefs (1).

8. Serre selon l'une des revendications 3 à 7, **caractérisée en ce que** ledit dispositif d'injection d'air (3) est positionné en vis-à-vis des extrémités longitudinales bout à bout de deux enveloppes consécutives adjacentes recouvrant une même nef, et ledit dispositif d'injection d'air alimente, par l'intermédiaire d'un même raccord de dérivation (65) et deux premiers tuyaux souples (60) lesdites deux enveloppes à proximité de leurs extrémités (50c) longitudinales adjacentes et, le cas échéant, ledit dispositif d'injection d'air coopère avec un clapet anti-retour (61) positionné en amont dudit raccord de dérivation (65).

9. Serre selon l'une des revendications 3 à 8, **caractérisée en ce que** les premières tuyauteries flexibles (60), entre les dispositifs d'injection d'air (3) et une dite enveloppe (50), et les secondes tuyauteries flexibles (4a), entre les capteurs de pression de type pressostat (4) et une dite enveloppe (50), sont raccordées au niveau du film de dessous (52) d'une même enveloppe (50), de préférence à proximité des chéneaux.

10. Serre selon l'une des revendications 3 à 7, **caractérisée en ce que** ledit capteur de pression (4) est relié (4a) pneumatiquement à une enveloppe disposée à une des extrémités longitudinales de la nef la plus éloignée de l'enveloppe au niveau de laquelle l'alimentation en air par ledit dispositif d'injection d'air est réalisé.

## Claims

1. A method of thermally insulating a greenhouse, preferably of the multi-bay type (10), having a plurality of tunnels (1), each tunnel being covered by at least one sheet (50) constituted by an inflatable double wall having two superposed films (51, 52) that are fastened all around their perimeter to the framework of the tunnel, in which method said sheets are inflated with a plurality of air injector devices (3) having electric motors, the method being **characterized in that** at least one said air injector device (3) is used per sheet (50) or per set (53) of sheets that are pneumatically connected together in series and that cover the same tunnel, each said air injector device (3) co-operating with a pressure sensor (4) measuring the pressure difference between the inside and the outside of said sheet(s) of each tunnel, such that the sensor (4) causes said air injector device (3) feeding the sheet or the set of sheets to stop or to run whenever the pressure inside the sheet or the set of sheets of each tunnel lies outside a determined range of values.

2. A method accord to claim 1, **characterized in that** a pressure is established in the sheets of said greenhouse that is higher than the outside pressure so as to obtain a pressure difference lying in the range 80 Pa to 250 Pa, and preferably in the range 100 Pa to 150 Pa.

3. A greenhouse including an installation for controlling the inflation of the covering sheets to implement a method of thermally insulating a greenhouse according to claim 1 or claim 2, the greenhouse being **characterized in that** it includes said air injector devices (3) and said pressure sensors (4) fastened to the frame of the greenhouse in the proximity of the sheet or a said sheet (50) of a set of sheets of each tunnel.

4. A greenhouse according to claim 3, **characterized in that** said air injector device (3) is a centrifugal blower type turbine connected to a flexible hose (60) providing a direct connection with a said sheet (50) and co-operating with a check valve (61) enabling said sheet(s) of the tunnel to be isolated.

5. A greenhouse according to claim 4, **characterized in that** said air injector device (3) is a centrifugal blower type turbine having its electric motor powered with single-phase electricity and connected in series with said pressure sensor (4) on the same electrical power supply cable (7), the air injector device preferably presenting a power of less than 100 W.

6. A greenhouse according to any one of claims 3 to 5, **characterized in that** the air injector device (3) is fed with air coming from inside the greenhouse.

7. A greenhouse according to any one of claims 3 to 6, **characterized in that** said air injector devices (3) are positioned substantially halfway along between the two end trusses of the tunnels (1).

8. A greenhouse according to any one of claims 3 to 7, **characterized in that** said air injector device (3) is positioned facing abutting longitudinal ends of two adjacent consecutive sheets covering the same tunnel, and said air injector device acts via a single branch connection (65) and two first flexible hoses (60) to feed said two sheets close to their adjacent longitudinal ends (50c) and, where appropriate, said air injector device co-operates with a check valve (61) positioned upstream from said branch connection (65).

9. A greenhouse according to any one of claims 3 to 8, **characterized in that** the first flexible hoses (60) between the air injector devices (3) and a said sheet (50), and the second flexible hoses (4a) between the pressostat type pressure sensors (4) and a said sheet (50) are connected together at the underfilm (52) of a given sheet (50), preferably in the proximity of the gutters.

10. A greenhouse according to any one of claims 3 to 7, **characterized in that** said pressure sensor (4) is pneumatically connected (4a) to a sheet located at one of the longitudinal ends of the tunnel that is furthest from the sheet that is fed with air by said air injector device.

## Patentansprüche

1. Verfahren zur Wärmeisolierung eines Treibhauses, vorzugsweise vom Typ mehrschiffig (10), das eine Vielzahl von Schiffen (1) umfaßt, wobei jedes Schiff mit wenigstens einer Hülle (50) bedeckt ist, die aus einer aufblasbaren Doppelwand mit zwei übereinander liegenden, über ihren gesamten Umfang an dem Tragwerk des Schiffs befestigten Filmen (51, 52) besteht, Verfahren, bei dem die Hüllen mit einer Vielzahl von Lufteinblasvorrichtungen (3) mit Elektromotor aufgeblasen werden, **dadurch gekennzeichnet, daß** wenigstens eine Lufteinblasvorrichtung (3) pro Hülle (50) oder pro Anordnung pneumatisch in Reihe verbundener (53) und ein gleiches Schiff bedeckender Hüllen verwendet wird, wobei jede Lufteinblasvorrichtung (3) mit einem Druckfühler (4) zusammenwirkt, der den Druckunterschied zwischen der Innenseite und der Außenseite der oder einer der Hüllen eines jeden Schiffs mißt, so daß der Fühler (4) das Anhalten oder den Betrieb der die Hülle oder die Hüllenanordnung versorgenden Lufteinblasvorrichtung (3) bewirkt, wenn der Druck innerhalb der Hülle oder der Hüllenanordnung eines jeden Schiffs außerhalb eines bestimmten Wertebereichs liegt.

2. Verfahren nach Anspruch 1, **dadurch gekennzeichnet, daß** in den Hüllen des Treibhauses ein Überdruck gegenüber dem Außendruck erzeugt wird, um einen Druckunterschied in einem Bereich von 80 bis 250 Pa, vorzugsweise von 100 bis 150 Pa zu erhalten.

3. Treibhaus, das eine Einrichtung zum Regulieren des Aufblasens von Abdeckhüllen für die Durchführung eines Verfahrens zur Wärmeisolierung eines Treibhauses nach Anspruch 1 oder 2 umfaßt, **dadurch gekennzeichnet, daß** es Lufteinblasvorrichtungen (3) und Druckfühler (4), die an dem Gestell des Treibhauses in der Nähe der oder einer Hülle (50) einer Anordnung von Hüllen eines jeden Schiffs befestigt sind, umfaßt.

4. Treibhaus nach Anspruch 3, **dadurch gekennzeichnet, daß** die Lufteinblasvorrichtung (3) eine Turbine vom Typ Mantellüfter ist, die mit einem Schlauch (60) verbunden ist, der die direkte Verbindung mit einer Hülle (50) sicherstellt und mit einem Rückschlagventil (61) zusammenwirkt, das ermöglicht, die Hülle oder Hüllen des Schiffs zu trennen.

5. Treibhaus nach Anspruch 4, **dadurch gekennzeichnet, daß** die Lufteinblasvorrichtung (3) eine Turbine vom Typ Mantellüfter ist, deren mit Einphasenstrom gespeister Elektromotor und der Druckfühler (4) an dem gleichen Stromversorgungskabel (7) in Reihe geschaltet sind, wobei vorzugsweise die Lufteinblasvorrichtung eine Leistung von weniger als 100 W aufweist.

6. Treibhaus nach einem der Ansprüche 3 bis 5, **dadurch gekennzeichnet, daß** die Lufteinblasvorrichtung (3) mit aus dem Innenraum des Treibhauses stammender Luft versorgt wird.

7. Treibhaus nach einem der Ansprüche 3 bis 6, **dadurch gekennzeichnet, daß** die Lufteinblasvorrichtungen (3) im wesentlichen auf halber Länge zwischen den beiden endseitigen Bindern der Schiffe (1) angeordnet sind.

8. Treibhaus nach einem der Ansprüche 3 bis 7, **dadurch gekennzeichnet, daß** die Lufteinblasvorrichtung (3) gegenüber den stumpfgestoßenen Längsenden von zwei aufeinanderfolgenden, benachbarten, ein gleiches Schiff bedeckenden Hüllen positioniert ist und die Lufteinblasvorrichtung mittels eines gleichen Abzweigstutzens (65) und zwei ersten Schläuchen (60) die beiden Hüllen in der Nähe ihrer benachbarten Längsenden (50c) beaufschlagt und gegebenenfalls die Lufteinblasvorrichtung (3) mit einem Rückschlagventil (61) zusammenwirkt, das dem Abzweigstutzen (65) vorgeschaltet ist.

9. Treibhaus nach einem der Ansprüche 3 bis 8, **dadurch gekennzeichnet, daß** die ersten Schlauchleitungen (60) zwischen den Lufteinblasvorrichtungen (3) und einer Hülle (50) und die zweiten Schlauchleitungen (4a) zwischen den Druckfühlern vom Typ Druckregler (4) und einer Hülle (50) im Bereich des unterseitigen Films (52) einer gleichen Hülle (50), vorzugsweise in der Nähe der Dachrinnen angeschlossen sind.

10. Treibhaus nach einem der Ansprüche 3 bis 7, **dadurch gekennzeichnet, daß** der Druckfühler (4) mit einer Hülle, die an einem der Längsenden des Schiffes angeordnet ist, das von der Hülle, im Bereich derer die Luftbeaufschlagung über die Lufteinblasvorrichtung stattfindet, am weitesten entfernt ist, pneumatisch verbunden (4a) ist.
